# FASCICULE DE BREVET EUROPEEN

(11) **EP 0 648 953 B1**
(45) Date de publication et mention de la délivrance du brevet: **23.04.1997**
(21) Numéro de dépôt: 94402309.2
(22) Date de dépôt: 14.10.1994
(51) Int. Cl.: F16F 1/14, B21D 11/14

(54) **Perfectionnements aux barres de torsion métalliques**
Verbesserungen an metallischen Torsionsstäben
Improvements to metallic torsionbars

(30) Priorité: 19.10.1993 FR 9312438
(43) Date de publication de la demande: 19.04.1995
(73) Titulaire: Allevard, F-92210 Saint-Cloud (FR)
(72) Inventeur: Langa, Mihail Remus, F-54000 Nancy (FR); Georges, Stéphane, F-54000 Nancy (FR)
(74) Mandataire: Burbaud, Eric

(56) Documents cités:
- DE-C- 3 830 028
- US-A- 2 452 974
- US-A- 4 231 555
- PATENT ABSTRACTS OF JAPAN vol. 16, no. 229 (M-1255) 27 Mai 1992 & JP-A-04 046 650 (RHYTHM MOTOR PARTS MFG CO) 17 Février 1992
- PATENT ABSTRACTS OF JAPAN vol. 8, no. 180 (M-318) 18 Août 1984 & JP-A-59 073 136 (KOUKAN KAKOU KK) 25 Avril 1984

## Description

La présente invention est relative aux barres de torsion métalliques notamment pour suspension de véhicules.

Plus précisément, l'invention concerne les barres de torsion comportant une partie centrale droite qui s'étend longitudinalement entre deux têtes de fixation adaptées à être fixées rigidement à d'autres organes mécaniques, au moins la partie centrale de la barre de torsion présentant une section annulaire circulaire.

Le document US-A-4 231 555 donne un exemple d'une telle barre de torsion creuse.

Toutefois, les barres de torsion creuses de l'art antérieur présentaient généralement une médiocre résistance en fatigue.

La présente invention a notamment pour but de remédier à cet inconvénient.

A cet effet, une barre de torsion métallique creuse du genre en question est essentiellement caractérisée en ce qu'elle est écrouie par prétorsion et en ce que la section de la partie centrale de la barre de torsion présente une section plastifiée radialement extérieure qui a été déformée plastiquement par la prétorsion, et une zone élastique radialement intérieure, qui a été déformée élastiquement par la prétorsion, la section annulaire de la partie centrale de la barre de torsion ayant une aire totale S et la zone plastifiée ayant une aire Sp telle que le rapport Sp/S soit au moins égal à 0,5 et au plus égal à 0,6.

Grâce à cette disposition, on obtient une barre de torsion qui, comparée à une barre de torsion pleine ayant les mêmes caractéristiques mécaniques d'élasticité en torsion, présente une masse inférieure pour un diamètre extérieur seulement très légèrement supérieur, et ce en conservant une résistance en fatigue satisfaisante.

Dans les modes de réalisation les plus courants, on peut obtenir une réduction de masse de 30 à 35 % par rapport à une barre pleine, pour une augmentation de diamètre de l'ordre de 5 %.

Avantageusement, au moins la partie centrale de la barre de torsion présente une surface intérieure à partir de laquelle s'étend radialement une zone soumise à des contraintes résiduelles de compression, ladite zone ayant une épaisseur radiale au moins égale à 0,3 mm.

La présente invention a aussi pour objet un procédé de fabrication d'une barre de torsion métallique, telle que définie ci-dessus, comportant les étapes successives de :
- écrouir une barre de torsion tubulaire en a la soumettant à un couple de prétorsion ayant une valeur choisie pour que le rapport Sp/S soit au moins égal à 0,5 et au plus égal à 0,6, et
- soumettre la surface intérieure d'au moins la partie centrale de la barre de torsion à un grenaillage suffisant pour créer des contraintes résiduelles de compression sur une épaisseur d'au moins 0,3 mm à partir de ladite surface intérieure.

Ainsi, l'étape de grenaillage permet de supprimer les contraintes résiduelles de traction qui sont généralement crées sur la surface intérieure de la barre à la suite de l'écrouissage par prétorsion, lesquelles contraintes de traction ont un effet négatif sur la résistance en fatigue de la barre.

En outre, le contrôle de l'état de surface à l'intérieur de la barre est relativement difficile, puisque la surface intérieure est peu accessible. Par conséquent, il est difficile de détecter des défauts de surface ayant des profondeurs inférieures à 0,2 mm. Du fait que le grenaillage crée des compressions résiduelles sur une épaisseur supéà 0,3 mm, les conséquences de ces défauts de surface sont supprimées, ce qui améliore nettement la résistance en fatigue de la barre de torsion.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue latérale schématique d'une barre de torsion selon une forme de réalisation de l'invention,
- la figure 2 est une vue en coupe prise selon la ligne II-II de la figure 1,
- la figure 3 est une vue schématique illustrant la mise en forme des têtes de fixation de la barre de torsion des figures précédentes, et
- la figure 4 est une vue en coupe longitudinale d'une des têtes de fixation obtenues par le procédé illustré sur la figure 3.

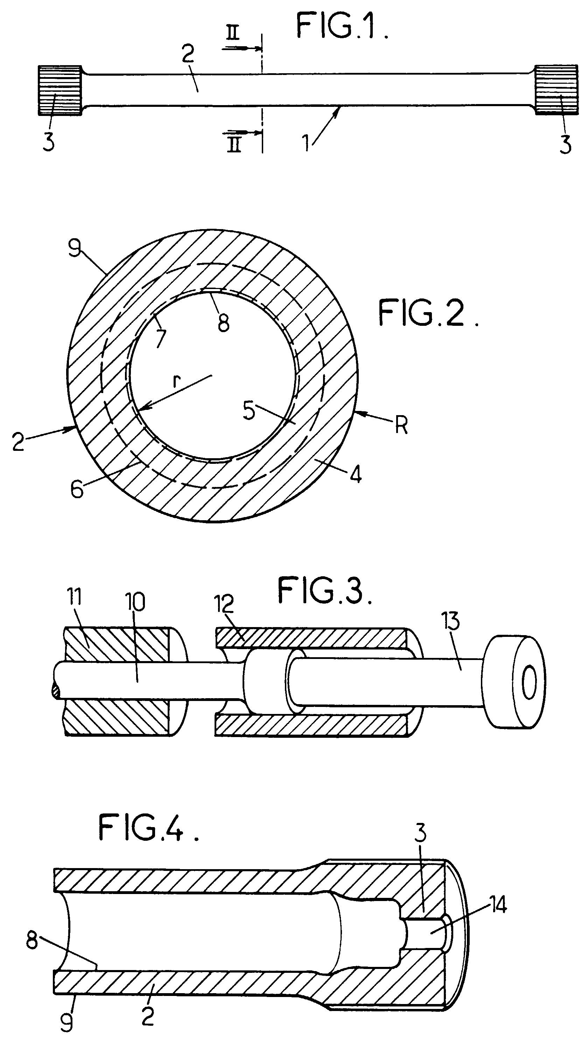

La barre de torsion 1 représentée sur la figure 1 comporte une partie centrale 2 rectiligne, s'étendant longitudinalement entre deux têtes de fixation 3, qui dans l'exemple représenté ont une surface extérieure cannelée.

Lorsque la barre de torsion 1 est montée à l'intérieur d'un véhicule, l'une des têtes de fixation 3 est généralement solidaire du châssis du véhicule, tandis que l'autre tête de fixation 3 est solidaire d'une articulation portant l'une des roues du véhicule, de façon que les mouvements d'oscillation de ladite articulation créent des couples de torsion dans la barre de torsion 1.

Comme représenté sur la figure 2, la barre de torsion selon l'invention présente, au moins dans sa partie centrale 2, et de préférence sur toute sa longueur, une section creuse annulaire. Ainsi, la partie centrale 2 de la barre de torsion comporte une surface extérieure 9 de révolution, présentant un rayon R, et une surface de révolution intérieure 8, présentant un rayon r.

Cette barre de torsion est formée par forgeage par refoulement à partir d'un tube métallique 10 de rayon intérieur r et de rayon extérieur R, comme représenté schématiquement sur la figure 3.

Pour cela, le tube 10 est maintenu entre des mâchoires 11, et une matrice cylindrique 12 est disposée autour d'une extrémité du tube 10, ladite matrice 12 présentant un diamètre intérieur égal au diamètre extérieur de la tête de fixation 3 à former.

En outre, une enclume 13 est pressée axialement contre l'extrémité du tube 10, tandis qu'une tension électrique est générée entre la mâchoire 11 et l'enclume 13, de façon à chauffer le tube 10 par le passage du courant électrique.

De cette façon, l'extrémité du tube 10 est refoulée, de sorte qu'elle augmente de diamètre jusqu'au diamètre intérieur de la matrice 12. Un perçage central 14 est ensuite ménagé dans l'extrémité axiale de la barre pour pouvoir accéder à l'intérieur de ladite barre.

Ce mode de mise en forme du tube 10, qui est utilisé classiquement pour la mise en forme des barres de torsion pleines, présente ici l'avantage particulier d'augmenter l'épaisseur de matière au niveau de têtes de fixation 3, comme représenté sur la figure 4.

On augmente ainsi la résistance mécanique des têtes de fixation 3, soumises à des concentrations de contraintes particulièrement importantes.

En outre, cette augmentation d'épaisseur permet la réalisation plus facile de cannelures sur la surface extérieure des têtes de fixation 3, par exemple par moletage.

Après cette mise en forme, la barre de torsion est soumise à un couple de torsion ayant une valeur suffisante pour entraîner un écrouissage du matériau métallique constitutif dudit tube.

Plus particulièrement, ce couple de torsion est choisi de façon que la section de la barre de torsion présente une zone plastifiée 4 annulaire radialement extérieure (voir figure 2), qui subit une déformation plastique pendant l'opération d'écrouissage, et une zone élastique 5 annulaire radialement intérieure, qui subit une déformation élastique pendant ladite opération d'écrouissage.

Lorsque le couple de prétorsion est relâché, la zone plastifiée 4 tend à conserver sa déformation finale créée par le couple de prétorsion, tandis que la zone élastique 5 tend à revenir élastiquement à sa forme initiale. Il en résulte des contraintes de cisaillement à l'intérieur du matériau, lesquelles contraintes sont nulles sur une surface de révolution 6 concentrique aux surfaces intérieure 8 et extérieure 9, cette surface 6 étant également la limite entre la zone plastifiée 4 et la zone élastique 5.

Selon l'invention, pour que la barre de torsion présente une bonne résistance à la fatigue, il est nécessaire que le rapport Sp/S entre l'aire de la section de la zone plastifiée 4 (Sp) et l'aire totale de la section annulaire de la partie centrale de la barre de torsion (S = π[R² - r²]), soit au moins égal à 0,5 et au plus égal à 0,6.

Après écrouissage de la barre de torsion, ses surfaces intérieure 8 et extérieure 9 sont généralement soumises à un grenaillage, qui permet en particulier d'éliminer d'éventuelles contraintes de traction au voisinage de ces surfaces intérieure et extérieure, et d'introduire des contraintes de compression permettant de retarder l'amorçage des fissures qui pourraient s'initier à partir des défauts de surface de la barre de torsion. On améliore ainsi la durée de vie de la barre de torsion.

En particulier, les paramètres du grenaillage appliqué sur la surface intérieure 8 de la barre de torsion sont choisis de façon à engendrer des contraintes résiduelles de compression dans une zone annulaire 7 (signalée schématiquement en pointillés sur la figure 2), sur une épaisseur égale à au moins 0,3 mm, ce qui permet de traiter notamment les défauts de surface non détectables à l'intérieur de la barre de torsion, c'est-à-dire, dans l'état actuel de la technique, les défauts de surface ayant une profondeur inférieure à 0,2 mm.

Dans un exemple de réalisation particulier, on a réalisé une barre de torsion selon l'invention à partir d'un acier au manganèse/bore présentant une résistance à la rupture de 1150 MPa.

Les dimensions de cette barre de torsion sont les suivantes :
- longueur totale : 582 mm,
- longueur élastique équivalente (compte tenu de l'encastrement des têtes de fixation) : 530 mm,
- diamètre extérieur R : 24,23 mm,
- diamètre intérieur r : 15,5 mm,
- diamètre extérieur des têtes de fixation 3 cannelées : 30 mm,
- longueur des têtes de fixation 3 : 21 mm,
- rayon du congé de raccordement entre la partie centrale 2 et les têtes de fixation 3 : minimum 20 mm.

Cette barre de torsion présente une masse de 1,37 kg.

Elle a été mise en forme par forgeage par refoulement, puis soumise à un écrouissage par prétorsion sous un couple de prétorsion de 175,394 m daN, le rapport Sp/S obtenu étant égal à 0,54.

Après écrouissage, la barre de torsion a été soumise à un grenaillage externe avec des billes de diamètre 0,3 mm, pour une saturation de 90 % (90 % de la surface extérieure a été touché par les billes), et une flèche Almen A2 supérieure ou égale à 0,3 mm (paramètre normalisé représentatif de l'intensité du grenaillage).

La surface intérieure de la barre de torsion a été traitée également par grenaillage, pour obtenir une profondeur de traitement (épaisseur de la zone 7) de 0,36 mm, et une flèche Almen A supérieure ou égale à 0,4 mm.

La barre de torsion ainsi obtenue a été soumise à un essai de fatigue en torsion ondulée, dans lequel la barre de torsion a été soumise à un couple statique de 81,9 m daN, correspondant à une torsion angulaire d'un certain angle α, la barre étant soumise à des torsions angulaires successives de plus ou moins 11,6° autour de cet angle a statique, ledit angle α étant supérieur à 11,6°.

Selon les normes en vigueur en France, la résistance à la fatigue d'une barre de torsion est généralement caractérisée par le paramètre B 10 %, correspondant à un nombre de cycles de torsion tels que, selon la loi dite de Weibull, la probabilité pour qu'une barre de torsion casse après un nombre de cycle inférieur audit paramètre B10%, soit égale à 10 %.

Les normes françaises imposent un paramètre B10 % égal à 150 000 cycles.

Le même paramètre B10 %, mesuré pour la barre de torsion particulière décrite ci-dessus, est de 320 000 cycles, soit 113 % au-dessus de la norme.

Le même essai a été réalisé sans grenaillage interne de la barre de torsion, et a donné un paramètre B10 % de 220 000 cycles, soit 48 % au-dessus de la norme, ce qui est déjà excellent.

## Revendications

1. Barre de torsion métallique (1), comportant une partie centrale (2) droite qui s'étend longitudinalement entre deux têtes de fixation (3) adaptées à être fixées rigidement à d'autres organes mécaniques, au moins la partie centrale (2) de la barre de torsion présentant une section annulaire circulaire,
caractérisée en ce que ladite barre de torsion est écrouie par prétorsion et en ce que la section de ladite partie centrale (2) présente une section plastifiée (4) radialement extérieure qui a été déformée plastiquement par la prétorsion et une zone élastique (5) radialement intérieure qui a été déformée élastiquement par la prétorsion, la section annulaire de la partie centrale de la barre de torsion ayant une aire totale S et la zone plastifiée ayant une aire Sp telle que le rapport Sp/S soit au moins égal à 0,5 et au plus égal à 0,6.

2. Barre de torsion selon la revendication 1, dans laquelle au moins la partie centrale (2) présente une surface intérieure (8) à partir de laquelle s'étend radialement une zone (7) annulaire soumise à des contraintes résiduelles de compression, ladite zone (7) ayant une épaisseur radiale au moins égale à 0,3 mm.

3. Procédé de fabrication d'une barre de torsion métallique (1) comportant une partie centrale (2) droite qui s'étend longitudinalement entre deux têtes de fixation (3) adaptées à être fixées rigidement à d'autres organes mécaniques, au moins la partie centrale (2) de la barre de torsion présentant une section annulaire circulaire et présentant ainsi une surface intérieure (8), ce procédé étant caractérisé en ce qu'il comporte les étapes successives de :
- écrouir une barre de torsion tubulaire en la soumettant à un couple de prétorsion ayant une valeur choisie pour que la section de la partie centrale (2) de la barre de torsion présente une zone plastifiée (4) radialement extérieure déformée plastiquement par la prétorsion et une zone élastique (5) radialement intérieure déformée élastiquement par la prétorsion, la section annulaire de la partie centrale de la barre de torsion ayant une aire totale S et la zone plastifiée ayant une aire Sp telle que le rapport Sp/S soit au moins égal à 0,5 et au plus égal à 0,6, et
- soumettre la surface intérieure (8) d'au moins la partie centrale (2) de la barre de torsion à un grenaillage suffisant pour créer des contraintes résiduelles de compression sur une épaisseur radiale d'au moins 0,3 mm à partir de ladite surface intérieure.

4. Procédé selon la revendication 3, dans lequel les têtes de fixation (3) sont formées par forgeage par refoulement à partir d'un tube cylindrique (10).

## Patentansprüche

1. Torsionsstab (1) aus Metall, umfassend einen geraden zentralen Teil (2), welcher sich in Längsrichtung zwischen zwei Befestigungsköpfen (3) erstreckt, die dazu ausgelegt sind, mit weiteren mechanischen Einrichtungen fest verbunden zu werden, wobei wenigstens der zentrale Teil (2) des Torsionsstabs einen kreisringförmigen Querschnitt aufweist,
dadurch gekennzeichnet, daß der Torsionsstab durch Vortorsion kaltverfestigt ist, und daß der Querschnitt des zentralen Teils (2) einen radial äußeren plastischen Bereich (4), welcher durch die Vortorsion plastisch deformiert wurde, und eine radial innere elastische Zone (5) aufweist, welche durch die Vortorsion elastisch deformiert wurde, wobei der Ringquerschnitt des zentralen Teils des Torsionsstabs eine Gesamtfläche S aufweist und die plastische Zone eine Fläche Sp aufweist, so daß das Verhältnis Sp/S wenigstens gleich 0,5 und höchstens gleich 0,6 ist.

2. Torsionsstab nach Anspruch 1, bei welchem wenigstens der zentrale Teil (2) eine Innenfläche (8) aufweist, von welcher aus sich in Radialrichtung eine ringförmige Zone (7) erstreckt, welche Restdruckbeanspruchungen unterliegt, wobei diese Zone (7) eine radiale Dicke von wenigstens gleich 0,3 mm aufweist.

3. Verfahren zur Herstellung eines Torsionsstabs (1) aus Metall, der einen geraden zentralen Teil (2) umfaßt, welcher sich in Längsrichtung zwischen zwei Befestigungsköpfen (3) erstreckt, die dazu ausgelegt sind, mit weiteren mechanischen Einrichtungen fest verbunden zu werden, wobei wenigstens der zentrale Teil (2) des Torsionsstabs einen kreisringförmigen Querschnitt aufweist und somit eine Innenfläche (8) aufweist, wobei das Verfahren dadurch gekennzeichnet ist, daß es die aufeinanderfolgenden Schritte umfaßt:
- einen röhrenförmigen Torsionsstab kaltzuverfestigen, indem auf ihn ein Vortorsionsmoment ausgeübt wird, welches einen Wert aufweist, der derart gewählt ist, daß der Querschnitt des zentralen Teils (2) des Torsionsstabs eine radial äußere durch die Vortorsion plastisch deformierte plastische Zone (4) und eine radial innere durch die Vortorsion elastisch deformierte elastische Zone (5) aufweist, wobei der Ringquerschnitt des zentralen Teils des Torsionsstabs eine Gesamtfläche S aufweist und die plastische Zone eine Fläche Sp aufweist, so daß das Verhältnis Sp/S wenigstens gleich 0,5 und höchstens gleich 0,6 ist, und
- die Innenfläche (8) wenigstens des zentralen Teils (2) des Torsionsstabs einer Kornbestrahlung zu unterziehen, die ausreichend ist, um auf einer von der Innenfläche ausgehenden radialen Dicke von wenigstens 0,3 mm Restdruckbeanspruchungen zu erzeugen.

4. Verfahren nach Anspruch 3, bei welchem die Befestigungsköpfe (3) durch Stauchschmieden aus einem zylindrischen Rohr (10) geformt werden.

## Claims

1. Metal torsion bar (1), including a straight central part (2) which extends longitudinally between two fixing heads (3) suitable for being rigidly fixed to other mechanical members, at least the central part (2) of the torsion bar having a circular annular cross-section, characterized in that said torsion bar is work-hardened by pretwisting and in that the cross-section of the said central part (2) has a radially outside plasticized section (4), which has been deformed plastically by the pretwisting, and a radially inside elastic zone (5), which has been deformed elastically by the pretwisting, the annular cross-section of the central part of the torsion bar having a total area S and the plasticized zone having an area Sp such that the ratio Sp/S is at least equal to 0.5 and at most equal to 0.6.

2. Torsion bar according to claim 1, in which at least the central part (2) has an inside surface (8) from which extends radially an annular zone (7) subjected to residual compressive stresses, said zone (7) having a radial thickness at least equal to 0.3 mm.

3. Method of manufacturing a metal torsion bar (1), including a straight central part (2) which extends longitudinally between two fixing heads (3) suitable for being rigidly fixed to other mechanical members, at least the central part (2) of the torsion bar having a circular annular cross-section and thus having an inside surface (8), this method being characterized in that it includes the successive steps consisting in :
- work-hardening a tubular torsion bar by subjecting it to a pretorque whose value is chosen so that the cross-section of the central part (2) of the torsion bar has a radially outside plasticized zone (4), deformed plastically by the pretwisting, and a radially inside elastic zone (5), deformed elastically by the pretwisting, the annular cross-section of the central part of the torsion bar having a total area S and the plasticized zone having an area Sp such that the ratio Sp/S is at least equal to 0.5 and at most equal to 0.6, and
- subjecting the inside surface (8) of at least the central part (2) of the torsion bar to shot peening sufficient to create residual compressive stresses to a radial thickness of at least 0.3 mm from the said inside surface.

4. Method according to claim 3, in which the fixing heads (3) are formed by upset forging starting from a cylindrical tube (10).
